# EUROPÄISCHE PATENTSCHRIFT

(11) **EP 2 862 155 B1**
(45) Veröffentlichungstag und Bekanntmachung des Hinweises auf die Patenterteilung: **17.03.2021**
(21) Anmeldenummer: 13730202.2
(22) Anmeldetag: 14.06.2013
(51) Int. Cl.: G08G 1/095, B60W 30/16, G08G 1/04, G08G 1/017, G08G 1/0967, B60W 30/18

(54) **VERFAHREN UND SYSTEM ZUM ANPASSEN EINES ANFAHRVERHALTENS EINES FAHRZEUGS AN EINE VERKEHRSSIGNALANLAGE SOWIE VERWENDUNG DES SYSTEMS**
METHOD AND SYSTEM FOR ADAPTING THE DRIVING-OFF BEHAVIOR OF A VEHICLE TO A TRAFFIC SIGNAL INSTALLATION, AND USE OF THE SYSTEM
PROCÉDÉ ET SYSTÈME POUR ADAPTER UN COMPORTEMENT DE DÉMARRAGE D'UN VÉHICULE À UNE INSTALLATION DE FEUX DE CIRCULATION AINSI QU'UTILISATION DU SYSTÈME

(30) Priorität: 14.06.2012 DE 102012210069
(43) Veröffentlichungstag der Anmeldung: 22.04.2015
(73) Patentinhaber: Continental Teves AG & Co. OHG, 60488 Frankfurt am Main (DE)
(72) Erfinder: STÄHLIN, Ulrich, 65760 Eschborn (DE)
(74) Vertreter: Continental Corporation
(86) Internationale Anmeldenummer: PCT/EP2013/062416
(87) Internationale Veröffentlichungsnummer: WO 2013/186379

(56) Entgegenhaltungen:
- EP-A1- 2 461 303
- WO-A2-2012/020293
- DE-A1-102008 035 992
- DE-A1-102008 060 869
- US-A1- 2010 020 169
- TSUGAWA S: "ISSUES AND RECENT TRENDS IN VEHICLE SAFETY COMMUNICATION SYSTEMS", INTERNET CITATION, 2005, XP007901779, Gefunden im Internet: URL:http://www.iatss.or.jp/english/researc h/29-1/pdf/29-1-02.pdf [gefunden am 2007-02-23]

## Beschreibung

Die Erfindung betrifft ein Verfahren zum Anpassen eines Anfahrverhaltens eines Fahrzeugs an eine Verkehrssignalanlage gemäß Oberbegriff von Anspruch 1, ein System zum Anpassen eines Anfahrverhaltens eines Fahrzeugs an eine Verkehrssignalanlage gemäß Oberbegriff von Anspruch 7 sowie eine Verwendung des Systems nach Anspruch 11.

Aus dem Stand der Technik sind verschiedengattige Fahrerassistenzsysteme bekannt, welche oftmals nicht allein der Entlastung des Fahrers dienen, sondern auch den Verkehrsfluss dahingehend beeinflussen, dass ein ruhiger und gleichmäßiger Fahrstil ermöglicht wird. Dies erhöht nicht nur die Sicherheit im Straßenverkehr sondern hilft auch, den Kraftstoffverbrauch und somit den CO₂-Ausstoß zu reduzieren. Insbesondere in städtischen Gebieten mit erhöhtem Verkehrsaufkommen kann hierdurch eine effizientere und umweltfreundlichere Verkehrsführung ermöglicht werden. Ein Beispiel für ein derartiges Fahrerassistenzsystem ist der sog. Ampelphasenassistent, der gemäß aktuellen Standardisierungsbestrebungen bei der flächendeckenden Einführung von Fahrzeug-zu-X-Kommunikation ("V2X-Kommunikation") voraussichtlich als fester Bestandteil in alle Neufahrzeuge implementiert sein wird.

In der DE 10 2007 048 809 A1 werden ein Verfahren und eine Vorrichtung zur Erkennung von verdeckten Objekten im Straßenverkehr offenbart. Dabei wird die Umgebung eines Fahrzeugs mittels Sensoren erfasst und entsprechende Informationen werden anschließend mittels einer Schnittstelle zur Fahrzeug-zu-Fahrzeug-Kommunikation an im Umfeld befindliche Fahrzeuge übertragen. Die übertragenen Informationen werden von den Umgebungsfahrzeugen empfangen und von diesen dazu verwendet, ein Umfeldmodell zu erweitern. Weiterhin werden eine Situationsanalyase des solcherart erweiterten Umfeldmodells sowie eine Bewertung der Situation des eigenen Fahrzeugs durchgeführt.

Die DE 10 2008 060 869 A1 beschreibt ein Verfahren und eine Vorrichtung zur Unterstützung eines Bedieners eines Fahrzeugs, welches sich einer Verkehrssignalanlage nähert. Die Verkehrssignalanlage verfügt über zwei unterschiedliche Betriebszustände, wobei in einem ersten Betriebszustand ein Überfahren einer Haltelinie erlaubt ist und in einem zweiten Betriebszustand ein Überfahren der Haltelinie nicht erlaubt ist. Das Fahrzeug empfängt ein Signal, welches den aktuellen Betriebszustand der Verkehrssignalanlage sowie eine Zeitdauer bis zu einem Wechsel des Betriebszustands beschreibt. Anhand des empfangenen Signals prüft das Fahrzeug, ob die Haltelinie der Verkehrssignalanlage mit einer Geschwindigkeit aus einem vorgegebenen Geschwindigkeitsbereich erreicht werden kann, während sich die Verkehrssignalanlage im ersten Betriebszustand befindet. In Abhängigkeit des Ergebnisses der Prüfung wird die Geschwindigkeit des Fahrzeugs beeinflusst oder dem Fahrer eine Empfehlung zu einer entsprechenden Beeinflussung der Geschwindigkeit gegeben.

Die DE 10 2008 035992 A1 offenbart eine Assistenzvorrichtung und ein Assistenzverfahren für Kraftfahrzeuge zur Fahroptimierung bezüglich einer Verkehrssignalanlage bei gleichzeitiger Kollisionsvermeidung mit einem potentiellen Hindernis.

Die im Stand der Technik bekannten Ampelphasenassistenten sind insofern nachteilbehaftet, als dass davon ausgegangen wird, dass alle im Umfeld befindlichen Fahrzeuge ebenso wie das Eigenfahrzeug befähigt sind, Fahrzeug-zu-X-Botschaften zu empfangen, zu senden und zu verarbeiten. Dies ist in der Realität jedoch regelmäßig nicht der Fall. Folgefahrzeuge, welche dem mit dem Ampelphasenassistenten ausgestatteten Fahrzeug nachfolgen und nicht zur Fahrzeug-zu-X-Kommunikation befähigt sind, können das Anfahrverhalten des Vorausfahrzeugs an eine Verkehrssignalanlage daher oftmals nicht nachvollziehen. Dies kann bei den Fahrern der Folgefahrzeuge unterschiedliche Reaktionen von Unverständnis über Irritation bis hin zu Aggressivität hervorrufen.

Die Aufgabe der vorliegenden Erfindung ist es daher, ein Verfahren vorzuschlagen, welches einen bekannten Ampelphasenassistenten dahingehend verbessert, dass nicht zur Fahrzeug-zu-X-Kommunikation befähigte Folgefahrzeuge bzw. nicht mit einem Ampelphasenassistenten ausgestattete Folgefahrzeuge durch das Anfahrverhalten eines mit dem Ampelphasenassistenten ausgestatteten Vorausfahrzeugs nicht irritiert werden.

Diese Aufgabe wird erfindungsgemäß durch das Verfahren zum Anpassen eines Anfahrverhaltens eines Fahrzeugs an eine Verkehrssignalanlage gemäß Anspruch 1 gelöst.

Gemäß dem erfindungsgemäßen Verfahren zum Anpassen eines Anfahrverhaltens eines Fahrzeugs an eine Verkehrssignalanlage, bei welchem die Verkehrssignalanlage ein Passieren in einem ersten Zustand erlaubt und in einem zweiten Zustand verbietet, wird vom Fahrzeug mittels Fahrzeug-zu-X-Kommunikations-mitteln eine Zustandsinformation und eine Zeitinformation der Verkehrssignalanlage empfangen und an ein Ampelphasenassistenzsystem weitergeführt. Die Zustandsinformation beschreibt einen vorliegenden Zustand der Verkehrssignalanlage und die Zeitinformation beschreibt ein Zeitfenster bis zu einem Zustandswechsel der Verkehrssignalanlage. Weiterhin werden vom Fahrzeug zumindest Positionsangaben umfassende Anwesenheitsinformationen von zur Fahrzeug-zu-X-Kommunika-tion befähigten Umgebungsfahrzeugen empfangen. Zusätzlich wird mittels Positionsbestimmungsmitteln eine Eigenposition des Fahrzeugs bestimmt. Zweckmäßigerweise ist es vorgesehen, dass vom Fahrzeug zusätzlich mittels Umfeldsensorik die Positionsangaben der Umgebungsfahrzeuge erfasst werden und die Umgebungsfahrzeuge automatisch als nicht zur Fahrzeug-zu-X-Kommunikation befähigt erkannt werden, wenn ihre Positionsangaben ausschließlich mittels Umfeldsensorik erfasst werden. Das Verfahren zeichnet sich dadurch aus, dass dem Fahrer die mittels Fahrzeug-zu-X-Kommunikation empfangenen Positionsangaben angezeigt werden und das Anfahrverhalten in Abhängigkeit der Zustandsinformation und der Zeitinformation und der Anwesenheit von nicht zur Fahrzeug-zu-X-Kommunikation befähigten Umgebungsfahrzeugen angepasst wird. Daraus ergibt sich der Vorteil, dass das Anfahrverhalten an die Verkehrssignalanlage nicht ausschließlich und starr in Abhängigkeit der empfangenen Zustandsinformation und der Zeitinformation festgelegt wird.

Vielmehr wird durch die Berücksichtigung von nicht zur Fahrzeug-zu-X-Kommunikation befähigten Umgebungsfahrzeugen bei der Anpassung des Anfahrverhaltens des Fahrzeugs einer sonst ggf. auftretenden Irritation der Fahrer der nicht zur Fahrzeug-zu-X-Kommunikation befähigten Umgebungsfahrzeuge aufgrund eines unerwarteten Anfahrverhaltens des zur Fahrzeug-zu-X-Kommunikation befähigten Fahrzeugs Rechnung getragen. Die nicht zur Fahrzeug-zu-X-Kommunikation befähigten Umgebungsfahrzeuge werden vom Fahrer daran erkannt, dass sie ihm vom Fahrzeug nicht angezeigt werden aber dennoch vorhanden sind. Ausgehend von den ihm angezeigten und den von ihm ggf. zusätzlich wahrgenommenen Umgebungsfahrzeugen kann der Fahrer somit das Anfahrverhalten an die Verkehrssignalanlage z.B. unter gebührender Berücksichtigung der Zustandsinformation und der Zeitinformation sinnvoll anpassen.

Ebenfalls ist es möglich und bevorzugt, dass der Fahrer mittels einer Eingabe, beispielsweise mittels Betätigung eines Tasters oder mittels Spracheingabe, dem Fahrzeug die Anwesenheit von nicht zur Fahrzeug-zu-X-Kommunikation befähigten Umgebungsfahrzeugen anzeigt. In diesem Fall kann das Anpassen des Anfahrverhaltens des Fahrzeugs an die Verkehrssignalanlage selbständig vom Fahrzeug ausgeführt werden, weil das Fahrzeug über alle hierzu erfindungsgemäß notwendigen Informationen verfügt.

Da gemäß aktuellen Standardisierungsbestrebungen zukünftige zur Fahrzeug-zu-X-Kommunikation befähigte Neufahrzeuge auch stets mit einem Ampelphasenassistenzsystem ausgestattet sein werden, ist eine besondere Unterscheidung zwischen nicht zur Fahrzeug-zu-X-Kommunikation befähigten Fahrzeugen und nicht mit einem Ampelphasenassistenzsystem ausgestatteten Fahrzeugen im Sinne der Erfindung nicht notwendig.

Die Anwesenheitsinformationen im Sinne der Erfindung sind bevorzugt sog. "Cooperative Awareness Messages" (CAM), welche von jedem zur Fahrzeug-zu-X-Kommunikation befähigten Fahrzeug periodisch gesendet werden und neben einer Positionsangabe des Fahrzeugs in der Regel auch eine Identifikationsinformation sowie ggf. Geschwindigkeits- und Ausrichtungsinformationen umfassen.

Zusätzlich zu der Zustandsinformation und der Zeitinformation wird bevorzugt auch eine Information über die vom Fahrzeug zur Verkehrssignalanlage verlaufende Straßengeometrie übertragen. Diese Information kann ebenfalls verwendet werden, um das Anfahrverhalten anzupassen.

Die Zustandsinformation, die Zeitinformation und ggf. die Information über die Straßengeometrie können z.B. von der Verkehrssignalanlage direkt gesendet werden, falls diese über geeignete Fahrzeug-zu-X-Kommunikationsmittel verfügt. Alternativ können diese Informationen auch von einer lokalen, der Verkehrssignalanlage zugeordneten Datenbank oder einer entfernt liegenden zentralen Datenbank mittels geeigneter Kommunikationsmittel zur Verfügung gestellt werden.

Oftmals verfügen Verkehrssignalanlagen nicht nur über zwei unterschiedliche Zustände ("grün" und "rot"), sondern über drei Zustände ("grün", "rot" und "gelb"), welche sie einnehmen können. Der dritte Zustand ("gelb") bezeichnet hierbei üblicherweise einen Zwischenzustand zwischen dem ersten und dem zweiten Zustand. Sofern die Verkehrssignalanlage über mehr als zwei Zustände verfügt, beschreiben die Zustandsinformation und die Zeitinformation bevorzugt auch den dritten Zustand. Dabei kann der dritte Zustand sowohl einzeln für sich und unabhängig vom ersten und zweiten Zustand beschrieben werden, als auch als Bestandteil des ersten oder zweiten Zustands. In letzterem Falle würde also der Zustand "gelb" beispielsweise als Zustand "rot" beschrieben.

Zweckmäßigerweise ist es vorgesehen, dass vom Fahrzeug zusätzlich mittels Umfeldsensorik die Positionsangaben der Umgebungsfahrzeuge erfasst werden und die Umgebungsfahrzeuge automatisch als nicht zur Fahrzeug-zu-X-Kommunikation befähigt erkannt werden, wenn ihre Positionsangaben ausschließlich mittels Umfeldsensorik erfasst werden. Daraus ergibt sich der Vorteil, dass dem Fahrer nicht ausschließlich die zur Fahrzeug-zu-X-Kommunikation befähigten Umgebungsfahrzeuge bzw. deren Positionsangaben angezeigt werden können, sondern darüber hinaus auch die nicht zur Fahrzeug-zu-X-Kommunikation befähigten Umgebungsfahrzeuge bzw. deren Positionsangaben. Dies erhöht den Komfort für den Fahrer und unterstützt diesen zusätzlich bei der Anpassung des Anfahrverhaltens.

Bevorzugt ist es vorgesehen, dass ein vergleichsweise gleichmäßiges Anfahrverhalten gewählt wird, wenn keine nicht zur Fahrzeug-zu-X-Kommunikation befähigten Umgebungsfahrzeuge erkannt werden und dass ein vergleichsweise dynamisches Anfahrverhalten gewählt wird, wenn mindestens ein nicht zur Fahrzeug-zu-X-Kommunikation befähigtes Umgebungsfahrzeug erkannt wird. Daraus ergibt sich der Vorteil, dass im Falle der Anwesenheit von ausschließlich zur Fahrzeug-zu-X-Kommunikation befähigten Umgebungsfahrzeugen ein vergleichsweise umweltschonender und effizienter Fahrstil ermöglicht wird, da das Anfahrverhalten weitestgehend optimal an die Zustände der Verkehrssignalanlage anpassbar ist. Sofern jedoch auch nicht zur Fahrzeug-zu-X-Kommunikation befähigte Umgebungsfahrzeuge erkannt werden, wird dem Umstand Rechnung getragen, dass die Fahrer der nicht zur Fahrzeug-zu-X-Kommunikation befähigten Umgebungsfahrzeuge ein weitestgehend optimal an die Zustände der Verkehrssignalanlage angepasstes Anfahrverhalten aufgrund der ihnen nicht bekannten Zustandsinformationen und Zeitinformationen nicht nachvollziehen können. Dies könnte bei den Fahrern der Folgefahrzeuge unterschiedliche Reaktionen von Unverständnis über Irritationen bis hin zu Aggressivität hervorrufen. Durch das Wählen eines dynamischen Anfahrverhaltens wird ein Kompromiss getroffen, welcher sowohl den Zuständen der Verkehrssignalanlage als auch dem Vermeiden von evtl. Irritationen der Fahrer der Umgebungsfahrzeuge gerecht wird.

Unter dem Begriff "gleichmäßiges Anfahrverhalten" wird erfindungsgemäß ein Anfahrverhalten mit möglichst konstanter Geschwindigkeit verstanden, während der Begriff "dynamisches Anfahrverhalten" erfindungsgemäß ein Anfahrverhalten beschreibt, welches sich ausgehend von einer höheren Geschwindigkeit mit zunehmender Annäherung an die Verkehrssignalanlage zu einer geringeren Geschwindigkeit hin verändert, wobei die Reduzierung der Geschwindigkeit besonders bevorzugt mit zunehmender Annäherung an die Verkehrssignalanlage stärker wird und ganz besonders bevorzugt erst mit zunehmender Annäherung an die Verkehrssignalanlage beginnt.

In einer weiteren bevorzugten Ausführungsform ist es vorgesehen, dass das Anfahrverhalten ausschließlich in Abhängigkeit von dem Fahrzeug nachfolgenden Umgebungsfahrzeugen angepasst wird, wobei relative Positionen der Umgebungsfahrzeuge zum Fahrzeug aus der Eigenposition und den Positionsangaben bestimmt werden. Daraus ergibt sich der Vorteil, dass das Anfahrverhalten speziell in Abhängigkeit von denjenigen Umgebungsfahrzeugen angepasst werden kann, welche durch das Anfahrverhalten des Fahrzeugs in ihrem eigenen Fahrverhalten beeinflusst würden. Umgebungsfahrzeuge, die dem Fahrzeug z.B. voraus fahren oder sich auf einer anderen Fahrspur befinden, werden durch ein ggf. langsames Anfahren des Fahrzeugs an die Verkehrssignalanlage nicht dazu gezwungen, ebenfalls ihre Geschwindigkeit zu verlangsamen und müssen daher bei der Anpassung des Anfahrverhaltens nicht berücksichtigt werden.

Umgebungsfahrzeuge, die dem Fahrzeug voraus fahren und eine geringere Geschwindigkeit aufweisen als das Fahrzeug, werden allerdings unter allen Umständen stets zumindest insofern berücksichtigt, als dass das Anfahrverhalten nur in dem Maße angepasst wird, dass ein Auffahren auf das dem Fahrzeug voraus fahrende Umgebungsfahrzeug vermieden wird.

Zweckmäßigerweise ist es vorgesehen, dass einem Fahrer des Fahrzeugs angezeigt wird, ob nicht zur Fahrzeug-zu-X-Kommunikation befähigte Umgebungsfahrzeuge erkannt werden und insbesondere, ob dem Fahrzeug nachfolgende nicht zur Fahrzeug-zu-X-Kommunikation befähigte Umgebungsfahrzeuge erkannt werden. Somit ist dem Fahrer stets bekannt, ob und ggf. welche Umgebungsfahrzeuge nicht zur Fahrzeug-zu-X-Kommunikation befähigt sind und er selbst kann die Anpassung des Anfahrverhaltens besser nachvollziehen.

Außerdem ist es vorteilhaft, dass das Anfahrverhalten mittels einer optischen und/oder akustischen und/oder haptischen Empfehlung an den Fahrer oder mittels einer autonomen Geschwindigkeitsregelung angepasst wird. In ersterem Falle wird das Anfahrverhalten also vom Fahrer gesteuert, dem lediglich eine Empfehlung für das Anfahrverhalten gegeben wird. Dadurch behält der Fahrer die vollständige Kontrolle über sein Fahrzeug. In letzterem Falle findet stattdessen eine autonome Geschwindigkeitsregelung statt, was zur Entlastung des Fahrers beiträgt und in der Regel ein vergleichsweise gleichmäßigeres und kontrollierteres Anfahrverhalten ermöglicht.

Bevorzugt ist es vorgesehen, dass zur autonomen Geschwindigkeitsregelung und/oder als Umfeldsensorik ein intelligentes Geschwindigkeits- und Abstandsregelsystem verwendet wird. Ein Beispiel für ein intelligentes Geschwindigkeits- und Abstandsregelsystem ist das sog. "Adaptive Cruise Control"-System (ACC), das Eingriffe in die Motor- und Bremsensteuerung ausführt und über einen Radar- oder/und Infrarotsensor oder/und Mono- bzw. Stereokamerasensor den Abstand zum voraus fahrenden Umgebungsfahrzeug feststellt. Da derartige Systeme in aktuellen Fahrzeugen oftmals bereits serienmäßig vorhanden sind, entfällt zusätzlicher Einbau- und damit Kostenaufwand für die autonome Geschwindigkeitsregelung bzw. die Umfeldsensorik. Insbesondere die Umfeldsensorik wird jedoch bevorzugt durch weitere Umfeldsensoren ergänzt.

Die Erfindung betrifft weiterhin ein System zum Anpassen eines Anfahrverhaltens eines Fahrzeugs an eine Verkehrssignalanlage, welches eine Verkehrssignalanlage und Umgebungsfahrzeuge sowie ein Fahrzeug umfasst, wobei das Fahrzeug Fahrzeug-zu-X-Kommunikationsmittel und Positionsbestimmungsmittel und ein Ampelphasenassistenzsystem umfasst. Die Verkehrssignalanlage erlaubt ein Passieren in einem ersten Zustand und verbietet ein Passieren in einem zweiten Zustand. Mittels der Fahrzeug-zu-X-Kommunikationsmittel empfängt das Fahrzeug eine Zustandsinformation und eine Zeitinformation der Verkehrssignalanlage und führt diese an das Ampelphasenassistenzsystem weiter, wobei die Zustandsinformation einen vorliegenden Zustand der Verkehrssignalanlage beschreibt und die Zeitinformation ein Zeitfenster bis zu einem Zustandswechsel der Verkehrssignalanlage beschreibt. Weiterhin empfängt das Fahrzeug zumindest Positionsangaben umfassende Anwesenheitsinformationen der zur Fahrzeug-zu-X-Kommunikation befähigten Umgebungsfahrzeuge. Zusätzlich bestimmt das Fahrzeug mittels der Positionsbestimmungsmittel eine Eigenposition. Zweckmäßigerweise ist es vorgesehen, dass das Fahrzeug Umfeldsensorik umfasst und zusätzlich mittels der Umfeldsensorik die Positionsangaben der Umgebungsfahrzeuge erfasst und die Umgebungsfahrzeuge automatisch als nicht zur Fahrzeug-zu-X-Kommunikation befähigt erkannt werden, wenn ihre Positionsangaben ausschließlich mittels Umfeldsensorik erfasst werden. Das System zeichnet sich dadurch aus, dass die Anzeigemittel dem Fahrer die mittels Fahrzeug-zu-X-Kommunika-tion empfangenen Positionsangaben anzeigen und das Anfahrverhalten in Abhängigkeit der Zustandsinformation und der Zeitinformation und der Anwesenheit von nicht zur Fahrzeug-zu-X-Kommunikation befähigten Umgebungsfahrzeuge angepasst wird. Das erfindungsgemäße System umfasst somit alle notwendigen Mittel zur Ausführung des erfindungsgemäßen Verfahrens und erlaubt es, das Anfahrverhalten eines Fahrzeugs an eine Verkehrssignalanlage u.a. in Abhängigkeit von nicht zur Fahrzeug-zu-X-Kommunikation befähigten Umgebungsfahrzeugen anzupassen. Daraus ergeben sich die bereits beschriebenen Vorteile.

erfasst. Dadurch wird es ermöglicht, auch die nicht zur nicht zur Fahrzeug-zu-X-Kommunikation befähigten Umgebungsfahrzeuge direkt zu erfassen und dem Fahrer anzuzeigen. Dies erhöht den Komfort für den Fahrer und hilft, diesen weitergehend zu entlasten.

Weiterhin ist es vorteilhaft, dass die Fahrzeug-zu-X-Kommunikationsmittel auf Basis einer oder mehrerer Verbindungsklassen aus der Gruppe
- WLAN-Verbindung, insbesondere nach IEEE 802.11,
- ISM-Verbindung (Industrial, Scientific, Medical Band),
- Bluetooth®-Verbindung,
- ZigBee-Verbindung,
- UWB-Verbindung (Ultra Wide Band),
- WiMax®-Verbindung (Worldwide Interoperability for Microwave Access),
- Infrarotverbindung und
- Mobilfunkverbindung

Informationen senden und/oder empfangen. Diese Verbindungsklassen der Fahrzeug-zu-X-Kommunikationsmittel bieten dabei unterschiedliche Vor- und Nachteile. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber vergleichsweise gut zur Datenübertragung um Sichthindernisse herum geeignet. Infrarotverbindungen wiederum bieten ebenfalls eine geringe Datenübertragungsrate. Mobilfunkverbindungen schließlich werden durch Sichthindernisse nicht beeinträchtigt und bieten zusätzlich eine gute Datenübertragungsrate. Dafür ist ihr Verbindungsaufbau jedoch vergleichsweise langsam. Durch die Kombination und gleichzeitige bzw. parallele Nutzung mehrerer dieser Verbindungsklassen ergeben sich weitere Vorteile, da so die Nachteile einzelner Verbindungsklassen ausgeglichen werden können

Außerdem ist es vorteilhaft, dass die Umfeldsensorik Positionsangaben auf Basis einer oder mehrerer Sensorklassen aus der Gruppe
- Radarsensor,
- optischer Kamerasensor,
- Lidarsensor,
- Lasersensor und
- Ultraschallsensor

erfasst. Bei den genannten Sensorklassen handelt es sich um im Kraftfahrzeugbereich typischerweise verwendete Sensoren, die im Wesentlichen eine umfassende Erfassung und Erkennung des Fahrzeugumfelds ermöglichen. Zum gegenwärtigen Zeitpunkt ist bereits eine Vielzahl von Fahrzeugen standardmäßig mit mehreren Sensoren der genannten Sensorklassen ausgestattet und diese Zahl wird in Zukunft aller Voraussicht nach weiter steigen. Der zusätzliche Einbau- und Kostenaufwand zur Implementierung des erfindungsgemäßen Verfahrens in ein Kraftfahrzeug ist daher gering.

Bevorzugt ist es vorgesehen, dass das System das erfindungsgemäße Verfahren ausführt.

Die Erfindung betrifft weiterhin eine Verwendung des erfindungsgemäßen Systems in einem Fahrzeug.

Weitere bevorzugte Ausführungsformen ergeben sich aus den Unteransprüchen und den nachfolgenden Beschreibungen von Ausführungsbeispielen an Hand von Figuren.

Es zeigen
- Fig. 1: schematisch eine Verkehrssituation, in welcher sich ein Fahrzeug einer Verkehrssignalanlage nähert und
- Fig. 2: ein Flussdiagramm mit einer möglichen Ablaufsform des erfindungsgemäßen Verfahrens.

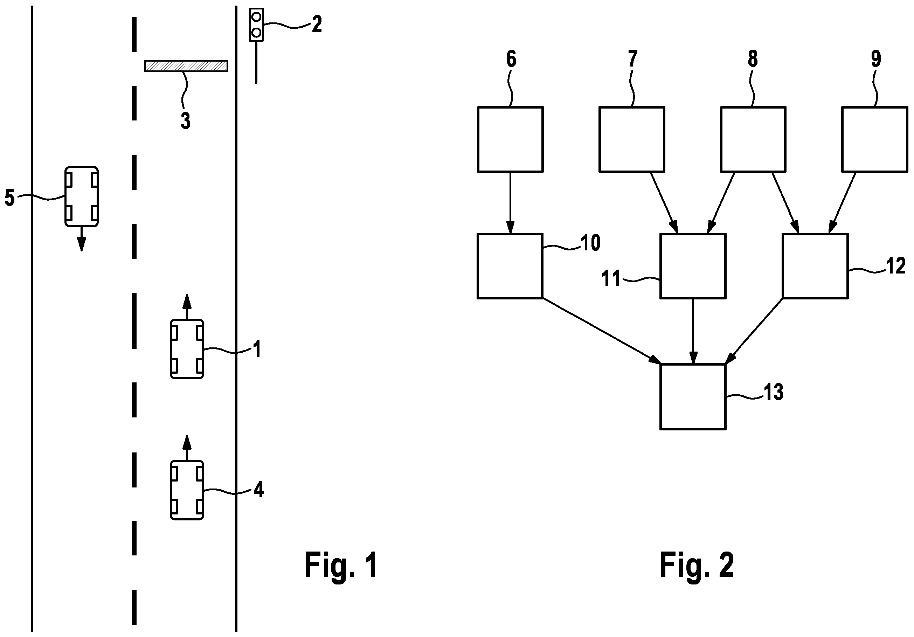

In Fig. 1 ist Fahrzeug 1 zu sehen, das mit dem erfindungsgemäßen System zum Anpassen eines Anfahrverhaltens eines Fahrzeugs an Verkehrssignalanlage 2 ausgestattet ist. Verkehrssignalanlage 2 befindet sich aktuell im Zustand "rot", der ein Passieren von Verkehrssignalanlage 2 durch Fahrzeug 1 verbietet. Verkehrssignalanlage 2 zugeordnet ist Haltelinie 3, die den Haltepunkt für sich Verkehrssignalanlage 2 nähernde Fahrzeuge beschreibt, wennVerkehrssignalanlage 2 sich im Zustand "rot" befindet. Fahrzeug 1 empfängt eine Zustandsinformation und eine Zeitinformation von Verkehrssignalanlage 2 und stellt diese Informationen einem fahrzeugseitigen Ampelphasenassistenzsystem zur Verfügung. Das Ampelphasenassistenzsystem wertet die Zustandsinformation und die Zeitinformation aus und erkennt, dass ein Zustandswechsel von Verkehrssignalanlage 2 in den Zustand "grün" in Kürze bevorsteht und ein Passieren von Haltelinie 3 ohne Fahrzeugstopp möglich ist, wenn Fahrzeug 1 sein Anfahrverhalten dahingehend anpasst, dass die aktuelle Geschwindigkeit verringert wird. Außerdem wird über einen an Fahrzeug 1 rückwärtig angeordneten Radarsensor Fahrzeug 4 erfasst. Da von Fahrzeug 4 keine Anwesenheitsinformationen mittels Fahrzeug-zu-X-Kommunikation empfangen werden, wird erkannt, dass Fahrzeug 4 nicht zur Fahrzeug-zu-X-Kommunikation befähigt ist und somit nicht die Zeitinformation von Verkehrssignalanlage 2 kennt. Da der Fahrer von Fahrzeug 4 freie Sicht auf Verkehrssignalanlage 2 hat, kennt er allerdings den aktuellen Zustand von Verkehrssignalanlage 2. Ein frühzeitiges Verlangsamen von Fahrzeug 1 würde zur Irritation des Fahrers von Fahrzeug 4 führen, da dieser aufgrund der ihm nicht bekannten Zeitinformation das Anfahrverhalten von Fahrzeug 1 an Verkehrssignalanlage 2 nicht nachvollziehen könnte. Über einen Kamerasensor wird außerdem Fahrzeug 5 erfasst, welches Fahrzeug 1 auf der Gegenfahrbahn entgegenkommt. Zusätzlich wird von Fahrzeug 5 eine Anwesenheitsinformationen empfangen, woraus erkannt wird, dass Fahrzeug 5 zur Fahrzeug-zu-X-Kommunikation befähigt ist. Da Fahrzeug 5 sich jedoch auf der Gegenfahrbahn befindet und außerdem zur Fahrzeug-zu-X-Kommunikation befähigt ist, wird Fahrzeug 5 für die Anpassung des Anfahrverhaltens von Fahrzeug 1 an Verkehrssignalanlage 2 nicht weiter berücksichtigt. Entsprechend wird unter Berücksichtigung sowohl der empfangenen Zustandsinformation und der Zeitinformation als auch der Anwesenheit von nicht zur Fahrzeug-zu-X-Kommunikation befähigtem Fahrzeug 4 eine dynamische Anfahrempfehlung über eine optische Anzeige an den Fahrer von Fahrzeug 1 ausgegeben. Die dynamische Anfahrempfehlung sieht vor, sich Verkehrssignalanlage 2 mit langsam abnehmender Geschwindigkeit zu nähern, um so ein Passieren von Verkehrssignalanlage 2 im Zustand "grün" zu ermöglichen und gleichzeitig Irritationen des Fahrers von Fahrzeug 4 über das Anfahrverhalten von Fahrzeug 1 zu vermeiden.

In Fig. 2 ist ein Flussdiagramm mit einer beispielhaften Ablaufsform des erfindungsgemäßen Verfahrens zum Anpassen eines Anfahrverhaltens eines Fahrzeugs an eine Verkehrssignalanlage dargestellt. In Verfahrensschritt 6 werden von einem Fahrzeug mittels Fahrzeug-zu-X-Kommunikationsmitteln eine Zustandsinformation und eine Zeitinformation der Verkehrssignalanlage empfangen. Gleichzeitig wird in Schritt 7 mittels Positionsbestimmungsmitteln in Form eines GPS-Empfängers eine Eigenposition des Fahrzeugs bestimmt, in Schritt 8 werden Positionsangaben von Umgebungsfahrzeugen mittels Umfeldsensorik erfasst und ebenfalls zeitlich parallel dazu werden in Verfahrensschritt 9 vom Fahrzeug mittels der Fahrzeug-zu-X-Kommunikationsmittel Anwesenheitsinformationen von zur Fahrzeug-zu-X-Kommunikation befähigten Umgebungsfahrzeugen empfangen. Die Anwesenheitsinformationen umfassen dabei jeweils eine Positionsangabe desjenigen Umgebungsfahrzeugs, von dem sie gesendet werden. In Verfahrensschritt 10 werden die Zustandsinformation und die Zeitinformation an ein Ampelphasenassistenzsystem weitergeführt und von diesem verarbeitet. Aus den von den Anwesenheitsinformationen umfassten Positionsangaben und den mittels Umfeldsensorik erfassten Positionsangaben wird in Verfahrensschritt 12 erkannt, welche der Umgebungsfahrzeuge nicht zur Fahrzeug-zu-X-Kommunikation befähigt sind, indem die Positionen der nicht zur Fahrzeug-zu-X-Kommunikation befähigten Umgebungsfahrzeuge ausschließlich mittels Umfeldsensorik erfasst werden. In Schritt 11 wird aus der bestimmten Eigenposition des Fahrzeugs und den über die Umfeldsensorik erfassten Positionsangeben eine relative Position der Umgebungsfahrzeuge zum Fahrzeug bestimmt. In Verfahrensschritt 13 schließlich wird das Anfahrverhalten des Fahrzeugs an die Verkehrssignalanlage unter Berücksichtigung der Zustandsinformation, der Zeitinformation und der dem Fahrzeug folgenden, nicht zur Fahrzeug-zu-X-Kommunikation befähigten Umgebungsfahrzeuge angepasst.

## Patentansprüche

1. Verfahren zum Anpassen eines Anfahrverhaltens eines Fahrzeugs (1) an eine Verkehrssignalanlage (2),
- bei welchem die Verkehrssignalanlage (2) ein Passieren in einem ersten Zustand erlaubt und in einem zweiten Zustand verbietet,
- bei welchem vom Fahrzeug (1) mittels Fahrzeug-zu-X-Kommunikationsmitteln eine Zustandsinformation und eine Zeitinformation der Verkehrssignalanlage (2) empfangen werden und an ein Ampelphasenassistenzsystem weitergeführt werden,
- wobei die Zustandsinformation einen vorliegenden Zustand der Verkehrssignalanlage beschreibt und die Zeitinformation ein Zeitfenster bis zu einem Zustandswechsel der Verkehrssignalanlage (2) beschreibt,
- bei welchem vom Fahrzeug (1) mittels Positionsbestimmungsmitteln eine Eigenposition bestimmt wird,
**dadurch gekennzeichnet, dass**
- weiterhin vom Fahrzeug (1) zumindest Positionsangaben umfassende Anwesenheitsinformationen von zur Fahrzeug-zu-X-Kommunikation befähigten Umgebungsfahrzeugen (4, 5) empfangen werden, und
- vom Fahrzeug (1) zusätzlich mittels Umfeldsensorik die Positionsangaben der Umgebungsfahrzeuge (4, 5) erfasst werden und die Umgebungsfahrzeuge (4, 5) automatisch als nicht zur Fahrzeug-zu-X-Kommunikation befähigt erkannt werden, wenn ihre Positionsangaben ausschließlich mittels Umfeldsensorik erfasst werden, und
- dass dem Fahrer die mittels Fahrzeug-zu-X-Kommunikation empfangenen Positionsangaben angezeigt werden und
- das Anfahrverhalten in Abhängigkeit der Zustandsinformation und der Zeitinformation und der Anwesenheit von nicht zur Fahrzeug-zu-X-Kommunikation befähigten Umgebungsfahrzeugen (4, 5) angepasst wird.

2. Verfahren nach Anspruch 1,
**dadurch gekennzeichnet,**
**dass** ein vergleichsweise gleichmäßiges Anfahrverhalten gewählt wird, wenn keine nicht zur Fahrzeug-zu-X-Kommunikation befähigten Umgebungsfahrzeuge (4, 5) erkannt werden und
**dass** ein vergleichsweise dynamisches Anfahrverhalten gewählt wird, wenn mindestens ein nicht zur Fahrzeug-zu-X-Kommunikation befähigtes Umgebungsfahrzeug (4, 5) erkannt wird.

3. Verfahren nach mindestens einem der Ansprüche 1 und 2,
**dadurch gekennzeichnet,**
**dass** das Anfahrverhalten ausschließlich in Abhängigkeit von dem Fahrzeug (1) nachfolgenden Umgebungsfahrzeugen (4, 5) angepasst wird,
wobei relative Positionen der Umgebungsfahrzeuge (4, 5) zum Fahrzeug (1) aus der Eigenposition und den Positionsangaben bestimmt werden.

4. Verfahren nach mindestens einem der Ansprüche 1 bis 3,
**dadurch gekennzeichnet,**
**dass** einem Fahrer des Fahrzeugs (1) angezeigt wird, ob nicht zur Fahrzeug-zu-X-Kommunikation befähigte Umgebungsfahrzeuge (4, 5) erkannt werden und insbesondere, ob dem Fahrzeug (1) nachfolgende nicht zur Fahrzeug-zu-X-Kommunikation befähigte Umgebungsfahrzeuge (4, 5) erkannt werden.

5. Verfahren nach mindestens einem der Ansprüche 1 bis 4,
**dadurch gekennzeichnet,**
**dass** das Anfahrverhalten mittels einer optischen und/oder akustischen und/oder haptischen Empfehlung an den Fahrer oder mittels einer autonomen Geschwindigkeitsregelung angepasst wird.

6. Verfahren nach mindestens einem der Ansprüche 1 bis 5,
**dadurch gekennzeichnet,**
**dass** zur autonomen Geschwindigkeitsregelung und/oder als Umfeldsensorik ein intelligentes Geschwindigkeits- und Abstandsregelsystem verwendet wird.

7. System zum Anpassen eines Anfahrverhaltens eines Fahrzeugs (1) an eine Verkehrssignalanlage (2),
umfassend eine Verkehrssignalanlage (2) und Umgebungsfahrzeuge (4, 5) sowie ein Fahrzeug (1),
wobei das Fahrzeug (1) Fahrzeug-zu-X-Kommunikationsmittel und Positionsbestimmungsmittel und Anzeigemittel und ein Ampelphasenassistenzsystem umfasst,
wobei die Verkehrssignalanlage (2) ein Passieren in einem ersten Zustand erlaubt und in einem zweiten Zustand verbietet,
wobei das Fahrzeug (1) mittels der Fahrzeug-zu-X-Kommunikationsmittel eine Zustandsinformation und eine Zeitinformation der Verkehrssignalanlage (2) empfängt und an das Ampelphasenassistenzsystem weiterführt,
wobei die Zustandsinformation einen vorliegenden Zustand der Verkehrssignalanlage (2) beschreibt und die Zeitinformation ein Zeitfenster bis zu einem Zustandswechsel der Verkehrssignalanlage (2) beschreibt,
wobei das Fahrzeug (1) ausgeführt ist, mittels der Positionsbestimmungsmittel eine Eigenposition zu bestimmen,
**dadurch gekennzeichnet, dass**
das Fahrzeug (1) weiterhin ausgeführt ist, zumindest Positionsangaben umfassende Anwesenheitsinformationen der zur Fahrzeug-zu-X-Kommunikation befähigten Umgebungsfahrzeuge (4, 5) zu empfangen und
dass das Fahrzeug (1) Umfeldsensorik umfasst und ausgeführt ist, zusätzlich mittels
der Umfeldsensorik die Positionsangaben der Umgebungsfahrzeuge (4, 5) zu erfassen und die Umgebungsfahrzeuge (4, 5) automatisch als nicht zur Fahrzeug-zu-X-Kommunikation befähigt erkannt werden, wenn ihre Positionsangaben ausschließlich mittels Umfeldsensorik erfasst werden, und
dass die Anzeigemittel ausgeführt sind, dem Fahrer die mittels Fahrzeug-zu-X-Kommunikation empfangenen Positionsangaben anzuzeigen und
das Anfahrverhalten in Abhängigkeit der Zustandsinformation und der Zeitinformation und der Anwesenheit von nicht zur Fahrzeug-zu-X-Kommunikation befähigten Umgebungsfahrzeuge (4, 5) angepasst wird.

8. System nach Anspruch 7,
**dadurch gekennzeichnet,**
**dass** die Fahrzeug-zu-X-Kommunikationsmittel auf Basis einer oder mehrerer Verbindungsklassen aus der Gruppe
- WLAN-Verbindung, insbesondere nach IEEE 802.11,
- ISM-Verbindung (Industrial, Scientific, Medical Band),
- Bluetooth®-Verbindung,
- ZigBee-Verbindung,
- UWB-Verbindung (Ultra Wide Band),
- WiMax®-Verbindung (Worldwide Interoperability for Microwave Access),
- Infrarotverbindung und
- Mobilfunkverbindung Informationen senden und/oder empfangen.

9. System nach mindestens einem der Ansprüche 7 und 8,
**dadurch gekennzeichnet,**
**dass** die Umfeldsensorik Positionsangaben auf Basis einer oder mehrerer Sensorklassen aus der Gruppe
- Radarsensor,
- optischer Kamerasensor,
- Lidarsensor,
- Lasersensor und
- Ultraschallsensor
erfasst.

10. Verwendung des Systems nach mindestens einem der Ansprüche 7 bis 9 in einem Fahrzeug.

## Claims

1. Method for adapting a driving-off behaviour of a vehicle (1) to a traffic signal installation (2),
- in which the traffic signal installation (2) permits passing in a first state and prohibits passing in a second state,
- in which a state information item and a time information item of the traffic signal installation (2) are received by the vehicle (1) by means of vehicle-to-X communication means and are passed on to a traffic light phase assistance system,
- wherein the state information item describes a present state of the traffic signal installation and the time information item describes a time window up to a change in state of the traffic signal installation (2),
- in which the vehicle (1) determines its own position by means of position-determining means,
**characterized in that**
- presence information comprising at least position data on vehicles (4, 5) in the surroundings which are enabled for vehicle-to-X communication is also received by the vehicle (1), and
- the vehicle (1) additionally detects the position data on the vehicles (4, 5) in the surroundings by means of a surroundings sensor system, and the vehicles (4, 5) in the surroundings are automatically detected as not being enabled for vehicle-to-X communication if their position data is detected exclusively by means of the surroundings sensor system, and
- **in that** the position data received by means of vehicle-to-X communication are displayed to the driver and
- the driving-off behaviour is adapted as a function of the state information item and the time information item and the presence of vehicles (4, 5) in the surroundings which are not enabled for vehicle-to-X communication.

2. Method according to Claim 1,
**characterized**
**in that** a comparatively uniform driving-off behaviour is selected if no vehicles (4, 5) in the surroundings which are not enabled for vehicle-to-X communication are detected, and
**in that** a comparatively dynamic driving-off behaviour is selected if at least one vehicle (4, 5) in the surroundings which is not enabled for vehicle-to-X communication is detected.

3. Method according to at least one of Claims 1 and 2,
**characterized**
**in that** the driving-off behaviour is adapted exclusively as a function of vehicles (4, 5) in the surroundings which are following the vehicle (1),
wherein relative positions of the vehicles (4, 5) in the surroundings with respect to the vehicle (1) are determined from the vehicle's own position and the position data.

4. Method according to at least one of Claims 1 to 3,
**characterized**
**in that** it is indicated to a driver of the vehicle (1) whether vehicles (4, 5) in the surroundings which are not enabled for vehicle-to-X communication are detected and, in particular, whether vehicles (4, 5) in the surroundings which are not enabled for vehicle-to-X communication and which are following the vehicle (1) are detected.

5. Method according to at least one of Claims 1 to 4,
**characterized**
**in that** the driving-off behaviour is adapted by means of a visual and/or acoustic and/or haptic recommendation to the driver or by means of an autonomous cruise control process.

6. Method according to at least one of Claims 1 to 5,
**characterized**
**in that** an intelligent adaptive cruise control system is used for the autonomous cruise control process and/or as a surroundings sensor system.

7. System for adapting a driving-off behaviour of a vehicle (1) to a traffic signal installation (2),
comprising a traffic signal installation (2) and vehicles (4, 5) in the surroundings as well as a vehicle (1),
wherein the vehicle (1) comprises vehicle-to-X communication means and position-determining means and display means and a traffic light phase assistance system, wherein the traffic signal installation (2) permits passing in a first state and prohibits passing in a second state,
wherein the vehicle (1) receives a state information item and a time information item of the traffic signal installation (2) by means of the vehicle-to-X communication means and passes them on to the traffic light phase assistance system,
wherein the state information item describes a present state of the traffic signal installation (2) and the time information item describes a time window up to a change in state of the traffic signal installation (2),
wherein the vehicle (1) is designed to determine its own position by means of the position-determining means,
**characterized in that**
the vehicle (1) is also designed to receive presence information of the vehicles (4, 5) in the surroundings which are enabled for vehicle-to-X communication, comprising at least position data, and
**in that** the vehicle (1) comprises a surroundings sensor system and is designed to additionally detect the position data of the vehicles (4, 5) in the surroundings by means of the surroundings sensor system, and the vehicles (4, 5) in the surroundings are automatically detected as not being enabled for vehicle-to-X communication if their position data is detected exclusively by means of the surroundings sensor system, and **in that** the display means are designed to indicate to the driver the position data received by means of vehicle-to-X communication, and the driving-off behaviour is adapted as a function of the state information item and the time information item and the presence of vehicles (4, 5) in the surroundings which are not enabled for vehicle-to-X communication.

8. System according to Claim 7,
**characterized**
**in that** the vehicle-to-X communication means transmits and/or receives information on the basis of one or more connection classes from the group:
- WLAN connection, in particular in accordance with IEEE 802.11,
- ISM connection (Industrial, Scientific, Medical Band),
- Bluetooth® connection,
- ZigBee connection,
- UWB (Ultra-Wide Band) connection,
- WiMax® (Worldwide Interoperability for Microwave Access) connection,
- infrared connection and
- mobile radio connection.

9. System according to at least one of Claims 7 and 8,
**characterized**
**in that** the surroundings sensor system detects position data on the basis of one or more sensor classes from the group:
- radar sensor,
- optical camera sensor,
- lidar sensor,
- laser sensor and
- ultrasonic sensor.

10. Use of the system according to at least one of Claims 7 to 9 in a vehicle.

## Revendications

1. Procédé permettant d'adapter un comportement de démarrage d'un véhicule (1) à une installation de feux de signalisation routière (2),
- l'installation de feux de signalisation routière (2) permettant un passage dans un premier état et l'interdisant dans un deuxième état,
- dans lequel le véhicule (1) reçoit de l'installation de feux de signalisation routière (2), à l'aide de moyens de communication de véhicule à X, une information d'état et une information de temps et les retransmet à un système d'assistance aux phases de feux de circulation,
- l'information d'état décrivant un état actuel de l'installation de feux de signalisation routière et l'information de temps décrivant une fenêtre de temps jusqu'à un changement d'état de l'installation de feux de signalisation routière (2),
- le véhicule (1) déterminant sa propre position à l'aide de moyens de détermination de position,
**caractérisé en ce que**
- le véhicule (1) reçoit en outre au moins des informations de présence comprenant des indications de position de la part de véhicules environnants (4, 5) aptes à la communication de véhicule à X, et
- le véhicule (1) détecte en plus à l'aide d'un système de capteurs d'environnement les indications de position des véhicules environnants (4, 5), et les véhicules environnants (4, 5) sont reconnus automatiquement comme étant inaptes à la communication de véhicule à X si leurs indications de position sont détectées exclusivement à l'aide d'un système de capteurs d'environnement, et
- **en ce que** les indications de position reçues à l'aide de la communication de véhicule à X sont montrées au conducteur, et
- le comportement de démarrage est adapté en fonction de l'information d'état et de l'information de temps et de la présence de véhicules environnants (4, 5) inaptes à la communication de véhicule à X.

2. Procédé selon la revendication 1, **caractérisé**
**en ce qu'**un comportement de démarrage relativement régulier est sélectionné si aucun véhicule environnant (4, 5) apte à la communication de véhicule à X n'est reconnu, et
**en ce qu'**un comportement de démarrage relativement dynamique est sélectionné si au moins un véhicule environnant (4, 5) inapte à la communication de véhicule à X est reconnu.

3. Procédé selon au moins l'une des revendications 1 et 2, **caractérisé**
**en ce que** le comportement de démarrage est adapté exclusivement en fonction des véhicules environnants (4, 5) suivant le véhicule (1),
dans lequel les positions relatives des véhicules environnants (4, 5) par rapport au véhicule (1) sont déterminées à partir de sa propre position et des indications de position.

4. Procédé selon au moins l'une des revendications 1 à 3, **caractérisé en ce qu'**on montre à un conducteur du véhicule (1) si des véhicules environnants (4, 5) inaptes à la communication de véhicule à X sont reconnus, et en particulier si des véhicules environnants (4, 5) inaptes à la communication de véhicule à X suivant le véhicule (1) sont reconnus.

5. Procédé selon au moins l'une des revendications 1 à 4, **caractérisé en ce que** le comportement de démarrage est adapté à l'aide d'une recommandation optique et/ou acoustique et/ou haptique pour le conducteur ou à l'aide d'une régulation de vitesse autonome.

6. Procédé selon au moins l'une des revendications 1 à 5, **caractérisé en ce qu'**un système intelligent de régulation de la vitesse et de la distance de sécurité est utilisé pour la régulation de vitesse autonome, et/ou comme système de capteurs d'environnement.

7. Système permettant d'adapter un comportement de démarrage d'un véhicule (1) à une installation de feux de signalisation routière (2),
comprenant une installation de feux de signalisation routière (2) et des véhicules environnants (4, 5) ainsi qu'un véhicule (1),
le véhicule (1) comprenant des moyens de communication de véhicule à X et des moyens de détermination de position et des moyens d'affichage et un système d'assistance aux phases de feux de circulation,
l'installation de feux de signalisation routière (2) permettant un passage dans un premier état et l'interdisant dans un deuxième état,
le véhicule (1) recevant à l'aide des moyens de communication de véhicule à X une information d'état et une information de temps de l'installation de feux de signalisation routière (2) et les transmettant au système d'assistance aux phases de feux de circulation,
l'information d'état décrivant un état actuel de l'installation de feux de signalisation routière (2), et l'information de temps décrivant une fenêtre de temps jusqu'à un changement d'état de l'installation de feux de signalisation routière (2),
le véhicule (1) étant réalisé pour déterminer sa propre position à l'aide des moyens de détermination de position,
**caractérisé**
**en ce que** le véhicule (1) est en outre réalisé pour recevoir au moins des informations de présence comprenant des indications de position de la part des véhicules environnants (4, 5) aptes à la communication de véhicule à X, et
**en ce que** le véhicule (1) comprend un système de capteurs d'environnement et est réalisé pour détecter en outre à l'aide du système de capteurs d'environnement les indications de position des véhicules environnants (4, 5), et les véhicules environnants (4, 5) sont reconnus automatiquement comme étant inaptes à la communication de véhicule à X si leurs indications de position sont détectées exclusivement à l'aide du système de capteurs d'environnement, et
**en ce que** les moyens d'affichage sont réalisés pour montrer au conducteur les indications de position reçues à l'aide de la communication de véhicule à X, et le comportement de démarrage est adapté en fonction de l'information d'état et de l'information de temps et de la présence de véhicules environnants (4, 5) inaptes à la communication de véhicule à X.

8. Système selon la revendication 7, **caractérisé en ce que** les moyens de communication de véhicule à X envoient et/ou reçoivent des informations sur la base d'une ou de plusieurs classes de connexion issues du groupe suivant
- connexion WLAN, en particulier selon IEEE 802.11,
- connexion ISM (« Industrial, Scientific, Medical Band »),
- connexion Bluetooth®,
- connexion ZigBee,
- connexion UWB (« Ultra Wide Band »),
- connexion WiMax® (« Worldwide Interoperability for Microwave Access »),
- connexion infrarouge, et
- connexion mobile.

9. Système selon au moins l'une des revendications 7 et 8, **caractérisé en ce que** le système de capteurs d'environnement détecte des indications de position sur la base d'une ou de plusieurs classes de capteurs issues du groupe suivant
- capteur radar,
- capteur de caméra optique,
- capteur lidar,
- capteur laser, et
- capteur à ultrasons.

10. Utilisation du système selon au moins l'une des revendications 7 à 9 dans un véhicule.
